# EUROPEAN PATENT APPLICATION

(11) **EP 4 492 848 A1**
(43) Date of publication of application: **15.01.2025**
(21) Application number: 22930774.9
(22) Date of filing: 08.03.2022
(51) Int. Cl.: H04W 24/02, H04W 88/08

(54) **POWER-SAVING BASE STATION SWITCHING DEVICE, WIRELESS ACCESS SYSTEM, AND POWER-SAVING BASE STATION SWITCHING METHOD**

(71) Applicant: Nippon Telegraph And Telephone Corporation, Chiyoda-ku Tokyo 100-8116 (JP)
(72) Inventor: FUJIMOTO, Kei, Musashino-shi, Tokyo 180-8585 (JP); OTANI, Ikuo, Musashino-shi, Tokyo 180-8585 (JP); SAITO, Shogo, Musashino-shi, Tokyo 180-8585 (JP); NATORI, Ko, Musashino-shi, Tokyo 180-8585 (JP)
(74) Representative: Dehns
(86) International application number: PCT/JP2022/010015
(87) International publication number: WO 2023/170789

(57) **Abstract**

A base station switching controller (200) is a power saving base station switching device that switches a base station that processes a wireless access signal, and the base station switching controller (200) includes: a base station optimum allocation/switching determination unit (220) that selects one of suitable base stations from a base station pool (100A) in which a plurality of base stations having different characteristics according to predetermined requirements are pooled and arranged in advance on the basis of traffic information collected by a traffic information collection unit (210); and a network switching control unit (240) that switches a network between a network to be connected to a switching source base station and a network to be connected to a switching destination base station.

## Description

### Technical Field

The present invention relates to a power saving base station switching device, a wireless access system and a power saving base station switching method.

### Background Art

In a wireless access system of mobile communication, transmission timings of radio signals between a terminal and a base station are managed as resources multiplexed in a time domain and a frequency domain by a medium access control (MAC) scheduler in the base station and are implemented by allocating resource elements (REs) suitable for each terminal.

Outline of the wireless access system will be described.

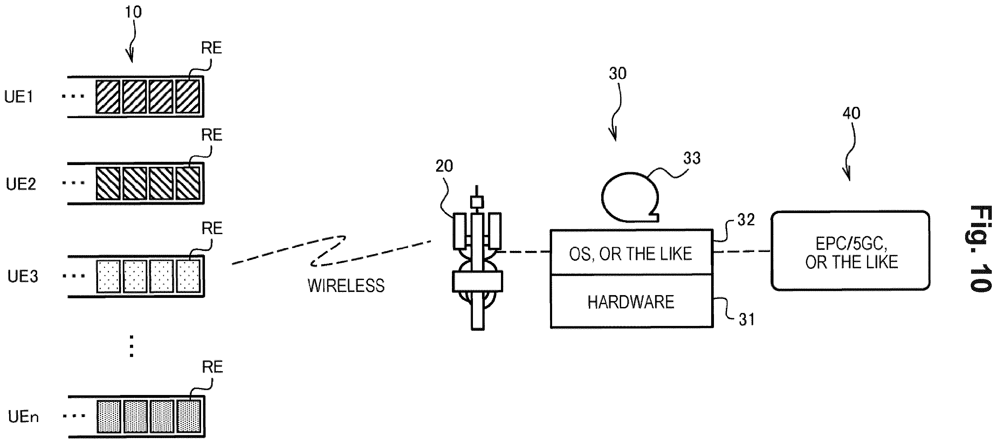

Fig. 10 is a view for explaining outline of the wireless access system.

As illustrated in Fig. 10, a wireless access system 1 includes a terminal (user equipment: UE) 10, an antenna (base station antenna) 20, a base station (base band unit: BBU) 30, and a core network 40.

The UE 10 includes a plurality of UE1, UE2, UE3,..., and UEn (n is an arbitrary natural number), and the base station 30 allocates and manages REs (see hatching or shading in Fig. 10. The REs are expressed in a distinguished manner using patterns of hatching or shading) for each UE. Note that UE1, UE2, UE3,..., and UEn will be collectively referred to as UE 10.

The antenna 20 is an antenna and a transmission/reception unit that wirelessly communicate with the UE 10 (hereinafter, the "antenna" collectively refers to an antenna, a transmission/reception unit, and a power supply unit thereof.). The transmission/reception data is connected to the base station 30 by, for example, a dedicated cable.

The base station 30 is a radio station which is established on land that communicates with the UE 10 and which does not move. The base station 30 is dedicated hardware (dedicated device) that performs radio signal processing. Alternatively, the base station 30 is a virtual radio access network (vR_AN) that performs radio signal processing in a wireless access system such as long term evolution (LTE) and five generation (5G) by a general-purpose server. In the vRAN (described later), a general-purpose server that is inexpensive and available in large quantities can be used as hardware of the base station 30.

The base station 30 includes hardware (HW) 31, an OS, and the like, 32, and a base station processing application 33.

The core network 40 is an evolved packet core (EPC)/5G core network (5GC (in the following description, "/" denotes "or")), or the like.

### <vRAN>

The vRAN will be described.

A wireless access system for mobile communication is required to have high delay requirements and high throughput, and thus, a base station (BBU) that performs radio signal processing is generally supported by dedicated hardware (dedicated device).

In recent years, with spread and expansion of a general-purpose server (Intel (registered trademark) architecture server (IA)), performance of the general-purpose server has been dramatically improved, and the general-purpose server can be obtained at low cost by mass production. As a result, vRAN in which a general-purpose server performs radio signal processing of a BBU in LTE or a 5G wireless access system has been studied.

In the vRAN, a general-purpose server that is inexpensive and available in large quantities can be used as hardware of the BBU, so that it is possible to construct a BBU pool by setting up a plurality of general-purpose servers in advance by setting up a server rack with a regional data center (DC) or a communication building within several 10 km from an antenna as an aggregation base (this concept may be referred to as centralized-R_AN (C-RAN)).

The BBU pool allows preparation of a plurality of pieces of base station hardware (general-purpose servers) in advance, and thus has a potential advantage of enabling flexible operation such as quick hardware replacement (switching) at the time of hardware failure and dynamic scale-out/in according to increase or decrease in traffic.

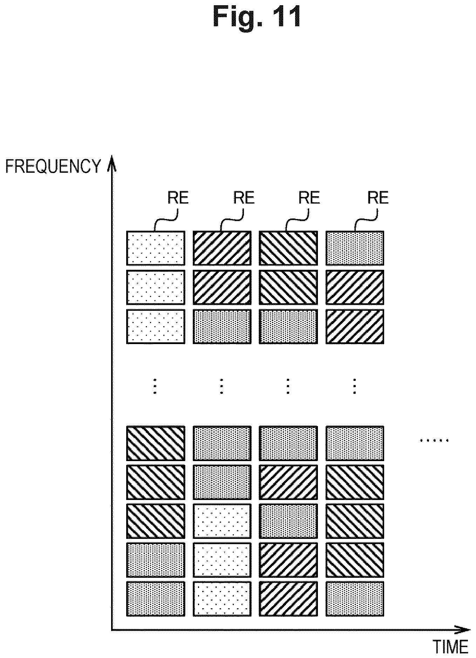

Fig. 11 is a view illustrating outline of resource scheduling in the base station 30 of the wireless access system 1 in Fig. 10.

As illustrated in Fig. 11, the base station 30 manages transmission timings of signals to be exchanged between the base station 30 and the UE 10 by allocating resources multiplexed in a time domain (horizontal axis) × a frequency domain (vertical axis) for each UE 10.

The number of REs can be variously set depending on a division mode (numerology), a radio band, or the like. Furthermore, in order to enable efficient transmission, the base station measures a noise level, or the like, of a signal received from the UE and performs control (for example, feedback loop control by hybrid automatic repeat request (HARQ)) such as allocation of REs suitable for each UE.

In a wireless access system for mobile communication, a base station (BBU) that performs radio signal processing includes a base station device intended to cope with different requirements, such as a performance-oriented type intended to achieve high performance and a power-saving oriented type intended to achieve power saving when an amount of traffic is small.

For example, a performance-oriented base station may be deployed in an urban area with a large amount of traffic, and a power-saving oriented base station may be deployed in a rural area with a small amount of traffic.

Examples of types of the base stations and advantages and disadvantages according to the traffic will be described.

The performance-oriented base station is a device intended for high performance, in which all of L1 processing (Forward Error Correction (FEC) of L1 baseband processing, front hole (FH) function, and the like) is performed with an accelerator. The accelerator may consume a large amount of power even when there is no data processing (see Non Patent Literature 1). Some accelerators such as (Field-Programmable Gate Array)/GPU (Graphics Processing Unit) /ASIC (Application-Specific Integrated Circuit) consume power exceeding 100 W even when there is no data to be processed.

The advantage is that high throughput and UE simultaneous connection can be achieved when an amount of traffic is large. The disadvantage is that power saving cannot be achieved in some cases when an amount of traffic is small because it is intended to achieve high performance.

The power-saving oriented base station is a device that can sleep processing and reduce power consumption by hardware as much as possible while there is no arrival of data to be processed (see Non Patent Literature 2). The advantage is that when the amount of traffic is large, high throughput and UE simultaneous connection cannot be achieved because it is intended to achieve power saving. When the amount of traffic is small, it is possible to save power by stopping, or the like, resources such as a CPU that is not used.

In the performance-oriented base station or the power-saving oriented base station alone, it may be difficult to achieve both high performance when the amount of traffic is large and power saving when the amount of traffic is small.

### Citation List

### Non Patent Literature

Non Patent Literature 1: Anupa Kelkar,Chris Dick et al.,"NVIDIA Aerial GPU Hosted AI-on-5G," 2021 IEEE 4th 5G World Forum (5GWF)
Non Patent Literature 2: Johnson Opadere,Qiang Liu,Tao Han et al.,"Energy-Efficient RRH Sleep Mode for Virtual Radio Access Networks," IEEE Global Communications Conference,2017

### Summary of Invention

### Technical Problem

Also in the related art, by a base station operator moving to the site according to fluctuation of traffic and manually replacing the base station, the base station can be switched to a base station (performance-oriented type/power-saving oriented type) suitable according to the fluctuation of the traffic.

However, it is necessary to take measures such as that the operator needs to visit the site, and that it is necessary to take over the configuration, switch the NW, and the like, in order to physically replace the device. Thus, there is a problem that it requires a lot of time and manpower.

The present invention has been made in view of such a background, and an object of the present invention is to simultaneously achieve high performance when an amount of traffic is large and power saving when an amount of traffic is small.

### Solution to Problem

In order to solve the above problem, there is provided a power saving base station switching device that switches a base station that processes a wireless access signal, the power saving base station switching device including: a traffic information collection unit that collects an amount of traffic flowing into a base station that is operating as traffic information; a switching determination unit that selects one of suitable base stations from a base station pool in which a plurality of base stations having different characteristics according to predetermined requirements are pooled and arranged in advance on the basis of the traffic information collected by the traffic information collection unit; and a network switching control unit that switches a network between a network to be connected to a switching source base station and a network to be connected to a switching destination base station.

### Advantageous Effects of Invention

According to the present invention, it is possible to simultaneously achieve high performance when an amount of traffic is large and power saving when an amount of traffic is small.

### Brief Description of Drawings

Fig. 1 is a schematic configuration diagram of a wireless access system according to an embodiment of the present invention.
Fig. 2 is a view illustrating an arrangement example of RUs/DUs/CUs of the wireless access system according to the embodiment of the present invention.
Fig. 3 is a view illustrating an arrangement example of a DU server of the wireless access system according to the embodiment of the present invention.
Fig. 4A is a view illustrating a base station pool A in which all base station functions of the wireless access system according to the embodiment of the present invention are pooled.
Fig. 4B is a view illustrating a DU pool B in which the base station functions of the wireless access system according to the embodiment of the present invention are separated into an RU/a DU/a CU and pooled in units of the DU.
Fig. 4C is a view illustrating a DU + CU pool C in which the base station functions of the wireless access system according to the embodiment of the present invention are separated into the RU/the DU/the CU and pooled in units of the DU and the CU.
Fig. 4D is a view illustrating a CU pool D in which the base station functions of the wireless access system according to the embodiment of the present invention are separated into the RU/the DU/the CU and pooled in units of the CU.
Fig. 4E is a view illustrating an RU pool E in which the base station functions of the wireless access system according to the embodiment of the present invention are separated into the RU/the DU/the CU and pooled in units of the RU.
Fig. 4F is a view illustrating an RU + DU pool F in which the base station functions of the wireless access system according to the embodiment of the present invention are separated into the RU/the DU/the CU and pooled in units of the RU and the DU.
Fig. 5 is a view illustrating an example in which configuration is input to the RU of the wireless access system according to the embodiment of the present invention to perform switching.
Fig. 6 is a view illustrating an example in which configuration is input to an NW switch of the wireless access system according to the embodiment of the present invention to perform switching.
Fig. 7 is a flowchart illustrating power saving base station switching processing of a base station and a base station switching controller of the wireless access system according to the embodiment of the present invention.
Fig. 8 is a view for explaining an example of synchronization of RE allocation information of the wireless access system according to the embodiment of the present invention.
Fig. 9 is a hardware configuration diagram illustrating an example of a computer that implements functions of a power saving base station switching device of the wireless access system according to the embodiment of the present invention.
Fig. 10 is a view illustrating outline of the wireless access system.
Fig. 11 is a view illustrating outline of resource scheduling in the base station of the wireless access system in Fig. 10.

### Description of Embodiments

Hereinafter, a wireless access system, and the like, in an embodiment of the present invention (hereinafter, referred to as "the present embodiment") will be described with reference to the drawings.

### [Outline]

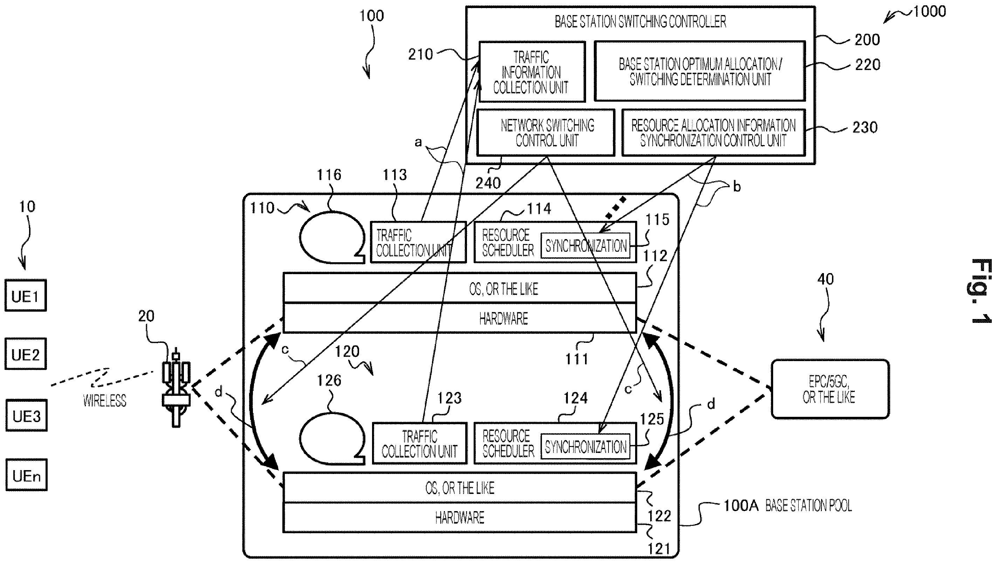

Fig. 1 is a schematic configuration diagram of a wireless access system according to the embodiment of the present invention. The present embodiment is applicable to a wireless access system of EPC/5GC mobile communication. The same components as those in Fig. 10 are denoted by the same reference numerals.

As illustrated in Fig. 1, a wireless access system 1000 includes a terminal (UE) 10, an antenna 20, a base station pool 100A that stores a plurality of base stations (BBU) having different oriented types, a base station switching controller (power saving base station switching device) 200 that selects and switches one of the base stations (BBU) pooled in the base station pool 100A, and a core network 40.

### <Base station pool 100A>

In the base station pool 100A, a plurality of base stations having different characteristics according to predetermined requirements are pooled and arranged in advance. For example, the base station pool 100A includes a plurality of base stations (BBU) having different orientated types, here, a performance-oriented base station 110 and a power-saving oriented base station 120. One base station (BBU) selected and switched by the base station switching controller 200 among the performance-oriented base station 110 and the power-saving oriented base station 120 stored in the base station pool 100A is the base station 100 that is currently operating. The base station 100 of Fig. 1 is either the performance-oriented base station 110 or the power-saving oriented base station 120 in the base station pool 100A.

In the base station pool 100A, the performance-oriented base station 110 intended to achieve high performance and the power-saving oriented base station 120 intended to achieve power saving are pooled and arranged.

In a case where base station functions are separated into a radio unit (RU), a distributed unit (DU), and a centralized unit (CU), in the base station pool 100A, the base stations are pooled in separation units of the RU, the DU, or the CU (the functions of the RU, the DU, and the CU will be described later).

In EPC/5GC mobile communication, a function of a BBU is provided in the DU and the CU, and a function of a remote radio head (RRH) that processes a radio frequency (RF) is provided in the RU. A general base station is installed as a slave station having only the RU as a facility, and a base station including the DU and the CU is referred to as a master station and is connected to the slave station through a network referred to as a fronthaul.

In addition, in the base station pool 100A, the base station functions can be pooled in units of a CPU core, an accelerator, or a network interface card (NIC) in a server, which is a unit smaller than the separation units of the RU, the DU, or the CU.

Note that, in the following description, the base station 100 refers to one base station (BBU) selected and switched by the base station switching controller 200 among the base stations (the performance-oriented base station 110 or the power-saving oriented base station 120) pooled in the base station pool 100A of Fig. 1.

### <Base station 100>

The performance-oriented base station 110 includes hardware 111, an OS, or the like, 112, a traffic collection unit 113, a resource scheduler 114, a synchronization unit 115, and a base station processing application 116.

The power-saving oriented base station 120 includes hardware 121, an OS, or the like, 122, a traffic collection unit 123, a resource scheduler 124, a synchronization unit 125, and a base station processing application 126.

The traffic collection units 113 and 123 periodically observe an amount of traffic, or the like, flowing into the base station 100 (the performance-oriented base station 110 or the power-saving oriented base station 120) and detect a change in traffic characteristics. The traffic collection units 113 and 123 transmit change information of the traffic characteristics to the base station switching controller 200 (see an arrow a in Fig. 1) .

The resource schedulers 114 and 124 are MAC schedulers that allocate REs multiplexed in a time domain and a frequency domain for each UE 10 (see Fig. 11) and schedule a wireless access signal between the UE 10 and the base station 100.

The synchronization units 115 and 125 perform synchronization when the RE allocation information managed by the resource schedulers 114 and 124 (MAC schedulers) is copied from a switching source to a switching destination.

### <Base station switching controller 200>

The base station switching controller 200 includes a traffic information collection unit 210, a base station optimum allocation/switching determination unit 220, a resource allocation information synchronization control unit 230, and a network switching control unit 240.

The traffic information collection unit 210 collects an amount of traffic flowing into the base station that is operating as traffic information. Specifically, the traffic information collection unit 210 collects the change information of the traffic characteristics collected by the traffic collection units 113 and 123 of the base station 100 and determines whether the conditions are conditions with a small amount of traffic or conditions with a large amount of traffic.

The traffic information collection unit 210 also utilizes traffic information collected in the past and predicts future traffic. In this event, the traffic information collection unit 210 may predict future traffic using machine learning, or the like.

The base station optimum allocation/switching determination unit 220 (switching determination unit) selects one of suitable base stations from the base station pool 100A in which a plurality of base stations having different characteristics according to predetermined requirements are pooled and arranged in advance on the basis of the traffic information collected by the traffic information collection unit 210. For example, the base station optimum allocation/switching determination unit 220 selects the performance-oriented base station 110 in a case where the amount of traffic is large, and selects the power-saving oriented base station 120 in a case where the amount of traffic is small. The base station (BBU) selected by the base station optimum allocation/switching determination unit 220 from the base station pool 100A is a suitable base station 100.

The base station optimum allocation/switching determination unit 220 determines whether or not there is a change from the currently used base station 100, and in a case where the switching destination base station 100 is powered OFF or is in the power saving mode, performs restoration.

The base station optimum allocation/switching determination unit 220 may perform control (scale-out/scale-in) to increase/decrease the number of base stations 100 to be used according to increase/decrease in traffic.

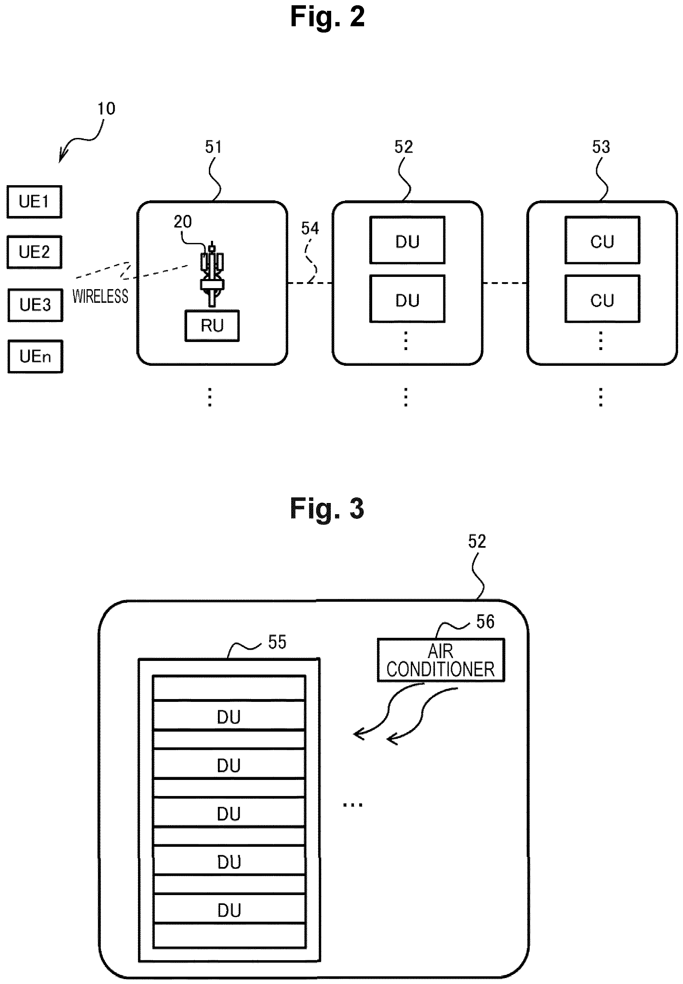

The base station optimum allocation/switching determination unit 220 may also control air conditioning (an example of power saving) (Fig. 3) of a data center in which hardware is arranged according to increase or decrease in traffic.

The resource allocation information synchronization control unit 230 synchronizes the resource allocation information between a switching destination base station and a switching source base station selected by the base station optimum allocation/switching determination unit 220 and takes over data of the resource allocation information from the switching source base station to the switching destination base station.

Specifically, the resource allocation information synchronization control unit 230 synchronizes the resource allocation information with the synchronization unit 115 of the resource scheduler 114 of the base station 100 (for example, the performance-oriented base station 110) that is the switching source, and synchronizes the resource allocation information with the synchronization unit 125 of the resource scheduler 124 of the base station 100 (for example, the power-saving oriented base station 120) that is the switching destination, and takes over the data of the resource allocation information from the base station 100 (for example, the performance-oriented base station 110) before the switching to the base station 100 (for example, the power-saving oriented base station 120) after the switching (see an arrow b in Fig. 1).

Here, the resource allocation information synchronization control unit 230 may periodically synchronize the resource allocation information with the synchronization unit 115 of the resource scheduler 114 of the base station 100.

In this manner, the resource allocation information synchronization control unit 230 takes over the data of the resource allocation information from the base station 100 before the switching to the base station 100 after the switching. In other words, the resource allocation information synchronization control unit 230 takes over the resource allocation information at the time of switching such that the re-allocation of the radio resource due to the base station switching does not occur.

The network switching control unit 240 switches the network between a network to be connected to the switching source base station and a network to be connected to the switching destination base station. Specifically, the network switching control unit 240 switches the network between the antenna 20 and the base station 100 and between the core network 40 and the base station 100 (see an arrow c in Fig. 1). In addition, the network switching control unit 240 makes the mode of the switching source base station 100 transition to the power OFF/power saving mode for power saving. The network switching control unit 240 switches the base station 100 to be used by switching the network between the antenna 20 and the base station 100 and between the core network 40 and the base station 100 (see a thick bidirectional arrow d in Fig. 1).

In this manner, the network switching control unit 240 switches the base station 100 to be used according to whether the amount of traffic is large or small. The base station 100 is switched by switching a NW.

### [RU/DU/CU arrangement configuration]

### <Separated into RU/DU/CU>

In the wireless access system 1000, it may be possible to separate base station functions into a radio unit (RU)/a distributed unit (DU)/a centralized unit (CU).

Each function of the RU/the DU/the CU will be described.

The functions of the RU include LOW PHY, AD/DA conversion, iFFT, analog beamforming, digital beamforming, and the like. The functions of the DU include HIGH PHY, modulation/demodulation, encoding/decoding, scrambling, and MAC, and these processing is executed by a DU server. The functions of the CU include execution of packet data convergence protocol, radio resource control, and service data adaptation protocol.

A form in which the RU and the DU are functionally divided and connected by a front hole is a general configuration. If the DU and the CU are each configured by dedicated devices, there are problems that so-called vendor lock-in that is bound by a specific vendor occurs, and it is difficult to flexibly change or extend functions.

The vRAN can support multi-vendor or flexible function extension by implementing functions by software on general-purpose hardware such as a server. In addition, if the hardware has extremely high performance, both the DU and the CU can be mounted on one server (alternatively, only the CU that does not handle modulation and demodulation is virtualized, and the CU and the DU are virtualized on different general-purpose hardware).

### <RU/DU/CU arrangement example>

An arrangement example of the RU/the DU/the CU will be described.

Fig. 2 is a view illustrating an arrangement example of the RUs/the DUs/the CUs.

As illustrated in Fig. 2, the antenna 20 and the RU that wirelessly communicate with the terminal (UE) 10 are installed in a high-place facility 51 such as a rooftop of a building or a steel tower.

The DU is installed in a communication facility 52 such as a local data center (DC) or a local communication building. In many cases, the communication facility 52 is provided in a communication facility owned by a communication carrier within approximately 20 km from the facility 51 in which the antenna 20 and the RU are arranged.

The CU is installed in a representative communication facility 53 such as a DC or a representative communication building. The representative communication facility 53 is often arranged in a representative communication facility in prefecture unit, or the like.

An arrangement example of the DU server will be described.

The DU includes a DU server.

Fig. 3 is a view illustrating an arrangement example of the DU server.

As illustrated in Fig. 3, the DU (DU server) includes, for example, a general-purpose server, and is accommodated in a server rack 55 of the communication facility 52 illustrated in Fig. 2. The server rack 55 is maintained at a predetermined environmental temperature by an air conditioner 56. A DU application is installed in a general-purpose server and is operated as the DU server.

### [Variation of switching target]

The base station pool 100A illustrated in Fig. 1 stores a plurality of base stations (BBU) having different oriented types, and switching is performed between the base stations as the switching target. However, the switching target is not limited to the base stations.

Variations of the switching target will be described below.

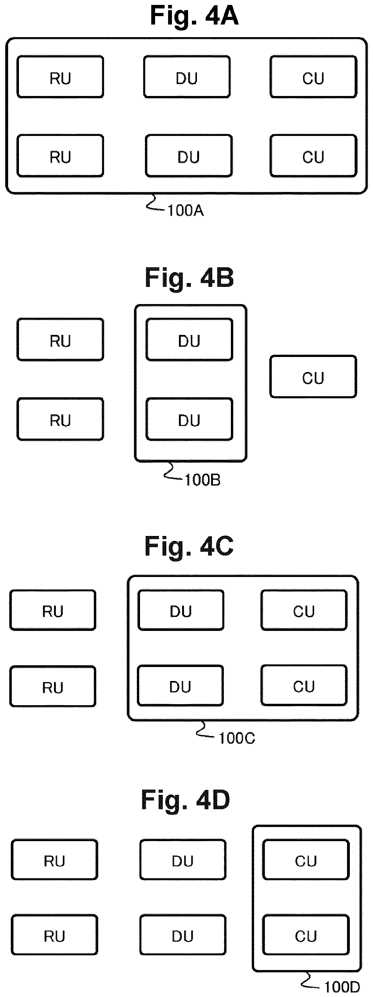

As a system in which pooling and switching are to be performed according to traffic, a plurality of variations as illustrated in Figs. 4A to 4F are assumed according to separation units of the RU/the DU/the CU. The present invention can be applied to any unit. In addition, by performing pooling in separation units of the RU/the DU/the CU, a 1: 1 relationship between the antenna 20 and the base station 100 can be made M: N (M and N are arbitrary natural numbers).

### <Separated into smaller units than RU/DU/CU>

The switching target may be pooled and switched in units smaller than the RU/the DU/the CU. The units smaller than the RU/the DU/the CU are, for example, a CPU core in a server, an accelerator, a network interface card (NIC), or the like.

### <Type of switching target>

The switching target is not limited to hardware, and software mounted on hardware of the base station 100 may be switched. For example, switching is performed between base station software having a power saving mode and performance-oriented base station software.

In addition, without switching the software itself, configuration of the software may be changed to perform switching between the power saving mode and the performance-oriented mode.

Fig. 4A is a view illustrating a base station pool A in which all the base station functions are pooled.

In the base station pool 100A illustrated in Fig. 4A, all the base station functions (that is, base stations) are pooled. The base station switching controller 200 (Fig. 1) selects and switches one base station 100 from the base station pool 100A. The base station switching controller 200 copes with the switching of the base station 100 by switching the NW.

Fig. 4B is a view illustrating a DU pool B in which the base station functions are separated into the RU/the DU/the CU and pooled in units of the DU.

In the DU pool 100B illustrated in Fig. 4B, the base station functions are separated into the RU/the DU/the CU, and a plurality of functions in units of the DU among them are pooled. In the DU pool 100B illustrated in Fig. 4B, two DUs are pooled. The base station switching controller 200 selects and switches a suitable DU from the DU pool 100B. The base station switching controller 200 implements DU switching by resetting an address (MAC address) of the DU server of the switching destination to the RU. In addition, in a case of VLAN connection, it is possible to cope with the switching by changing a VLAN tag.

Fig. 4C is a view illustrating a DU + CU pool C in which the base station functions are separated into the RU/the DU/the CU and pooled in units of the DU and the CU.

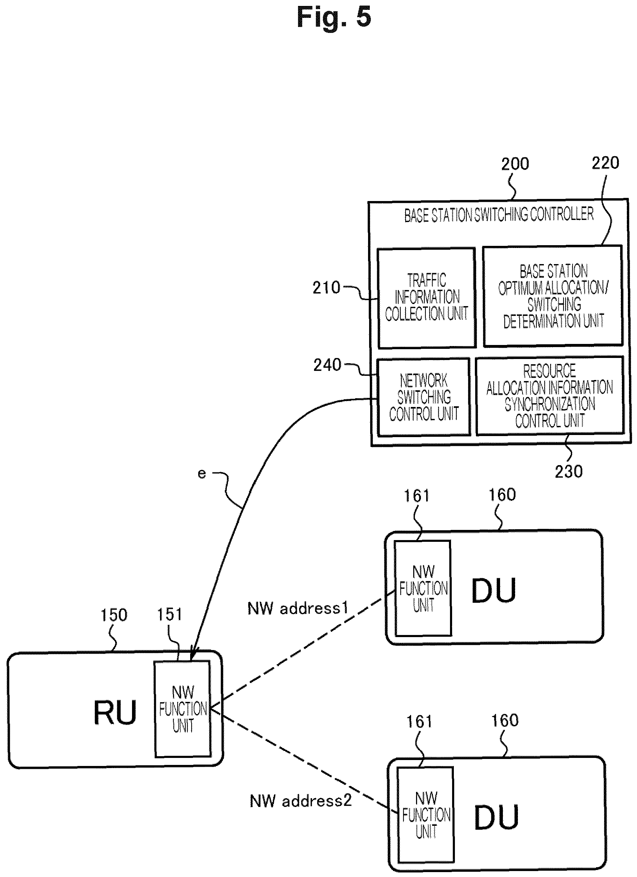

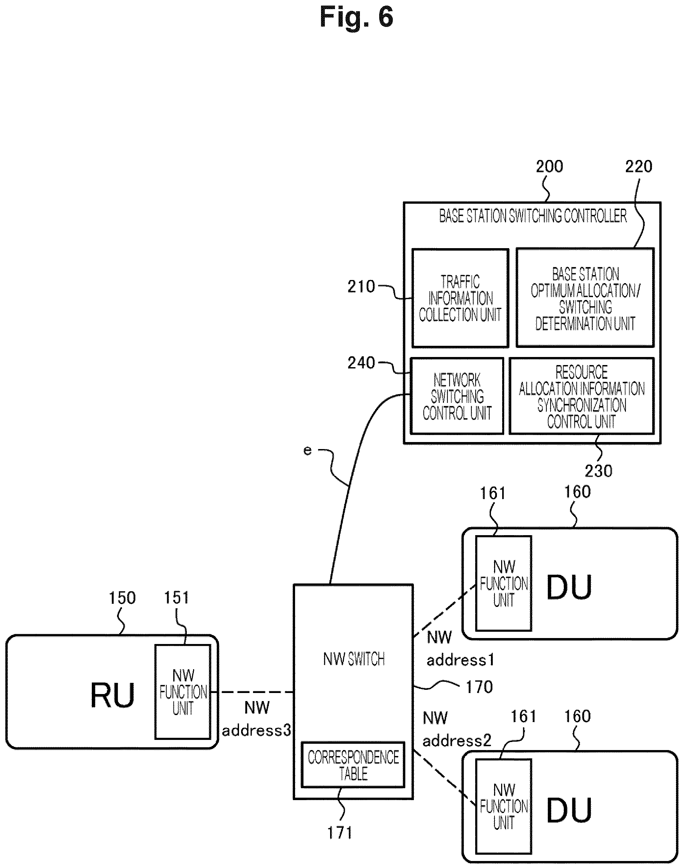

In the DU + CU pool 100C illustrated in Fig. 4C, the base station functions are separated into the RU/the DU/the CU, and a plurality of functions in units of the DU and the CU among them are pooled. In the DU + CU pool 100C illustrated in Fig. 4C, a total of four DUs and CUs in units of the DU and the CU are pooled. The base station switching controller 200 selects and switches a suitable DU or CU from the DU + CU pool 100C. The base station switching controller 200 switches the DU and the CU by resetting the address (MAC address) of the DU server (server that executes DU functions, that is, HIGH PHY, modulation/demodulation, encoding/decoding, scrambling, and MAC processing) of the switching destination to the RU (see Figs. 5 and 6).

Fig. 4D is a view illustrating a CU pool D in which the base station functions are separated into the RU/the DU/the CU and pooled in units of the CU.

In the CU pool 100D illustrated in Fig. 4D, the base station functions are separated into the RU/the DU/the CU, and a plurality of functions in units of the CU among them are pooled. In the CU pool 100D illustrated in Fig. 4D, two CUs in units of the CU are pooled. The base station switching controller 200 selects and switches a suitable CU from the CU pool 100D. The base station switching controller 200 implements the switching of the CU by resetting the address (MAC address) of the DU server of the switching destination to the RU.

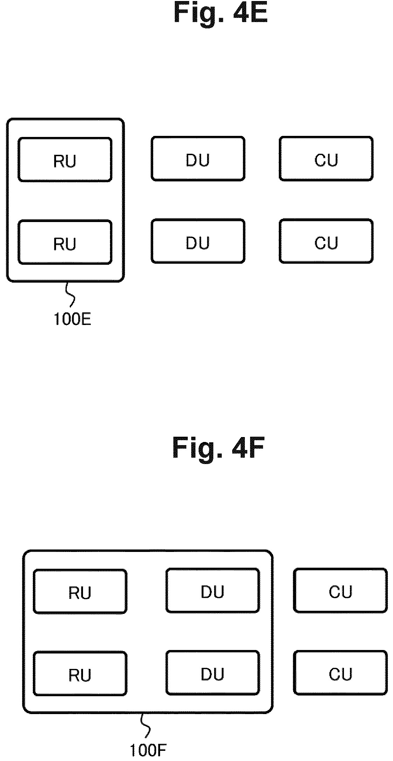

Fig. 4E is a view illustrating an RU pool D in which the base station functions are separated into the RU/the DU/the CU and are pooled in units of the RU.

In the RU pool 100E illustrated in Fig. 4E, the base station functions are separated into the RU/the DU/the CU, and a plurality of functions in units of the RU among them are pooled. In the RU pool 100E illustrated in Fig. 4E, two RUs in units of the RU are pooled. The base station switching controller 200 selects and switches a suitable RU from the RU pool 100E. The base station switching controller 200 implements the switching of the RU by resetting the address (MAC address) of the DU server of the switching destination to the RU.

Fig. 4F is a view illustrating an RU + DU pool in which the base station functions are separated into the RU/the DU/the CU and pools in units of the RU and the DU.

In the RU + DU pool 100F illustrated in Fig. 4F, the base station functions are separated into the RU/the DU/the CU, and a plurality of functions in units of the RU and the DU among them are pooled. In the RU + DU pool 100F illustrated in Fig. 4F, a total of four RUs and DUs in units of the RU and the DU are pooled. The base station switching controller 200 selects and switches a suitable RU or DU from the RU + DU pool 100F. The base station switching controller 200 switches the RU and the DU by resetting the address (MAC address) of the DU server of the switching destination to the RU (see Figs. 5 and 6).

### [Switching of RU/DU/CU]

An example in which the address of the DU server (Fig. 3) is set again to the RU will be described.

### <Example in which configuration is input to RU to perform switching>

Fig. 5 is a view illustrating an example in which configuration is input to an RU to perform switching.

As illustrated in Fig. 5, the RU 150 includes an NW function unit 151 that switches a NW function. The DU 160 includes an NW function unit 161 that switches a NW function.

The network switching control unit 240 of the base station switching controller 200 inputs configuration for switching the NW address of the connection destination DU to the NW function unit 151 of the RU 150 (rewriting the NW address) (reference sign e in Fig. 5). Upon receiving the configuration from the network switching control unit 240, the NW function unit 151 of the RU 150 switches the NW address from NW address 1 to NW address 2, for example.

### <Example in which configuration is input to NW switch to perform switching>

Fig. 6 is a view illustrating an example in which configuration is input to the NW switch to perform switching.

As illustrated in Fig. 6, the NW switch 170 is provided between the RU 150 and the DU 160. The NW switch 170 includes a correspondence table (table) 171 indicating correspondence between a connection destination NW address and a device.

The network switching control unit 240 of the base station switching controller 200 inputs configuration for switching the connection NW address between the RU and the DU to the NW switch 170 (reference sign e in Fig. 6). Upon receiving the configuration input from the network switching control unit 240, the NW switch 170 switches the NW address from, for example, the NW address 1 to the NW address 2 with reference to the correspondence table 171. In a case where the NW switch 170 is used, there is an advantage that the configuration (NW address 3) on the RU 150 side does not need to be changed.

Operation of the wireless access system 1000 configured as described above will be described below.

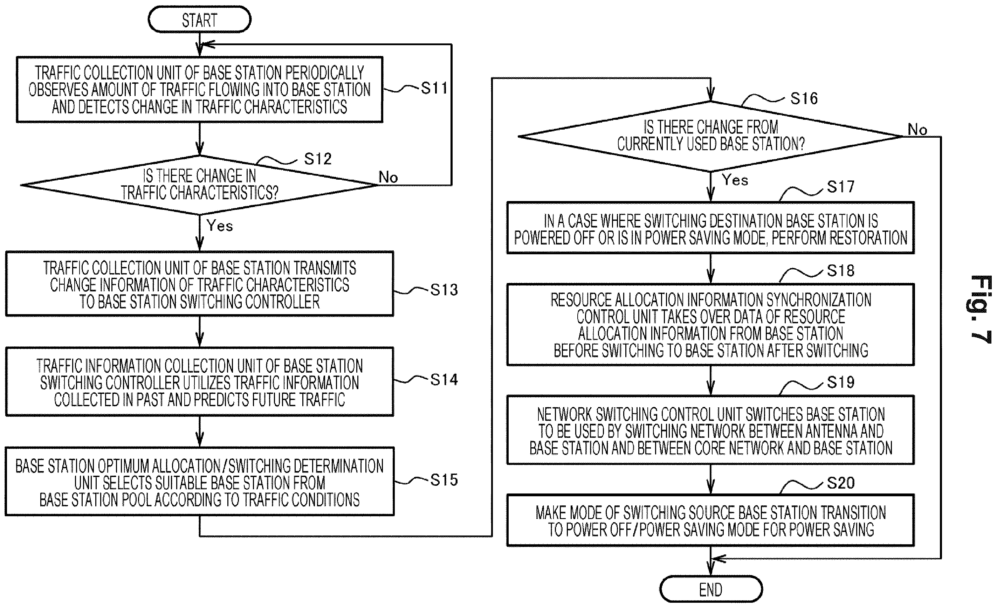

Fig. 7 is a flowchart illustrating power saving base station switching processing of the base station 100 and the base station switching controller 200 of the wireless access system 1000.

An example of a case will be described where the performance-oriented base station 110 pooled and arranged in the base station pool 100A of Fig. 1 is a switching source base station and the power-saving oriented base station 120 is a switching destination base station.

In step S11, the traffic collection unit 113 of the base station 100 (performance-oriented base station 110) periodically observes an amount of traffic, or the like, flowing into the base station 100 and detects a change in traffic characteristics.

In step S12, the traffic collection unit 113 determines whether or not there is a change in the traffic characteristics. In a case where there is no change in the traffic characteristics (S12: No), the processing returns to step S11.

In a case where there is a change in the traffic characteristics (S12: Yes), the traffic collection unit 113 transmits the change information of the traffic characteristics to the base station switching controller 200 in step S13 (see the arrow a in Fig. 1).

In step S14, the traffic information collection unit 210 of the base station switching controller 200 collects the change information of the traffic characteristics collected by the traffic collection unit 113 of the base station 100 and determines whether the conditions are conditions with a small amount of traffic or conditions with a large amount of traffic. The traffic information collection unit 210 also utilizes traffic information collected in the past and predicts future traffic. In this event, the traffic information collection unit 210 may predict future traffic using machine learning, or the like.

In step S15, the base station optimum allocation/switching determination unit 220 of the base station switching controller 200 selects a suitable base station from the base station pool 100A according to the traffic conditions collected by the traffic collection unit 113 of the base station 100 (performance-oriented base station 110). For example, the base station optimum allocation/switching determination unit 220 selects the performance-oriented base station 110 in a case where the amount of traffic is large, and selects the power-saving oriented base station 120 in a case where the amount of traffic is small. In addition, the base station optimum allocation/switching determination unit 220 may perform control (scale-out/scale-in) to increase/decrease the number of base stations 100 to be used according to increase/decrease in traffic. The base station optimum allocation/switching determination unit 220 may also control air conditioning of the data center in which the hardware is arranged according to the increase or decrease in traffic.

In step S16, the base station optimum allocation/switching determination unit 220 determines whether or not there is a change from the currently used base station 100 (performance-oriented base station 110). In a case where there is no change from the currently used base station 100 (the performance-oriented base station 110) (S16: No), the processing of this flow ends.

In a case where there is a change from the currently used base station 100 (performance-oriented base station 110) (S16: Yes), in step S17, the base station optimum allocation/switching determination unit 220 performs restoration in a case where the base station 100 (power-saving oriented base station 120) that is the switching destination is in the power OFF/power saving mode.

In step S18, the resource allocation information synchronization control unit 230 of the base station switching controller 200 takes over the data of the resource allocation information from the base station 100 (the performance-oriented base station 110) before the switching to the base station 100 (the power-saving oriented base station 120) after the switching (see the arrow b in Fig. 1).

Here, the resource allocation information synchronization control unit 230 may periodically synchronize the resource allocation information between the synchronization units 115 of the resource scheduler 114 of the base station 100.

In step S19, the network switching control unit 240 of the base station switching controller 200 switches the network between the antenna 20 and the base station 100 and between the core network 40 and the base station 100 (see the arrow c in Fig. 1), thereby switching the base station 100 to be used from the performance-oriented base station 110 to the power-saving oriented base station 120 after switching (see the thick bidirectional arrow d in Fig. 1).

In step S20, the network switching control unit 240 makes the mode of the switching source base station 100 (the performance-oriented base station 110) transition to the power OFF/power saving mode for power saving and ends the processing of this flow.

### <Example of network switching>

As a network to be switched, connection by Ethernet of Layer 2 (communication by MAC address) or connection by the VLAN is often performed between the RU and the DU, between the DU and the CU, and between the CU and the 5GC.

Thus, the network can be switched, for example, by resetting the address (MAC address) of the DU server of the switching destination to the RU in a case of switching between the RU and the DU in the DU pool 100B (Fig. 4B).

In addition, in a case of VLAN connection, it is possible to cope with the switching by changing a VLAN tag.

### <Specific example of large/small amount of traffic serving as switching trigger>

Traffic conditions for switching between the performance-oriented base station 110 (Fig. 1) and the power-saving oriented base station 120 (Fig. 1) will be exemplified.

### · Tidal scale (day and night)

It is known that traffic flowing into a base station has regularity on a daily basis. A communication amount tends to be large during the daytime when a person actively communicates, and the communication amount tends to be small during the nighttime when a person sleeps. By utilizing this regularity, in a case where the communication amount increases more than a predetermined threshold in the morning hours, the base station is switched from the power-saving oriented base station 120 to the performance-oriented base station 110. Conversely, in a case where the communication amount decreases to be less than the predetermined threshold at night, it is assumed that the base station is switched from the performance-oriented base station 110 to the power-saving oriented base station 120.

Here, the predetermined threshold may be manually set by an operator on the basis of past results or may be calculated by machine learning. In addition, in a case where there are characteristics for each day of the week according to an installation location of the base station, the threshold may be provided for each day of the week.

### ·Planned event

In a case where there is an event in which the amount of traffic is assumed to increase/decrease, event activation information may be held in advance, and the base station may be switched to the performance-oriented base station/the power-saving oriented base station. Examples of the event include a firework event, a baseball game (increase in traffic), and a shopping mall closing (small traffic).

### ·Sudden event

Unlike the above-described day and night variations and planned events, the base station may be switched between the performance-oriented base station and the power-saving oriented base station by a sudden event such as a disaster or a network failure. For example, machine learning may be performed in advance on behavior of increasing or decreasing traffic when a network failure occurs, and when the behavior matches the traffic pattern, the base station may be switched to a base station of a suitable performance-oriented base station/power-saving oriented base station.

### <Synchronization example of RE allocation information>

An example of synchronization of RE allocation information will be described.

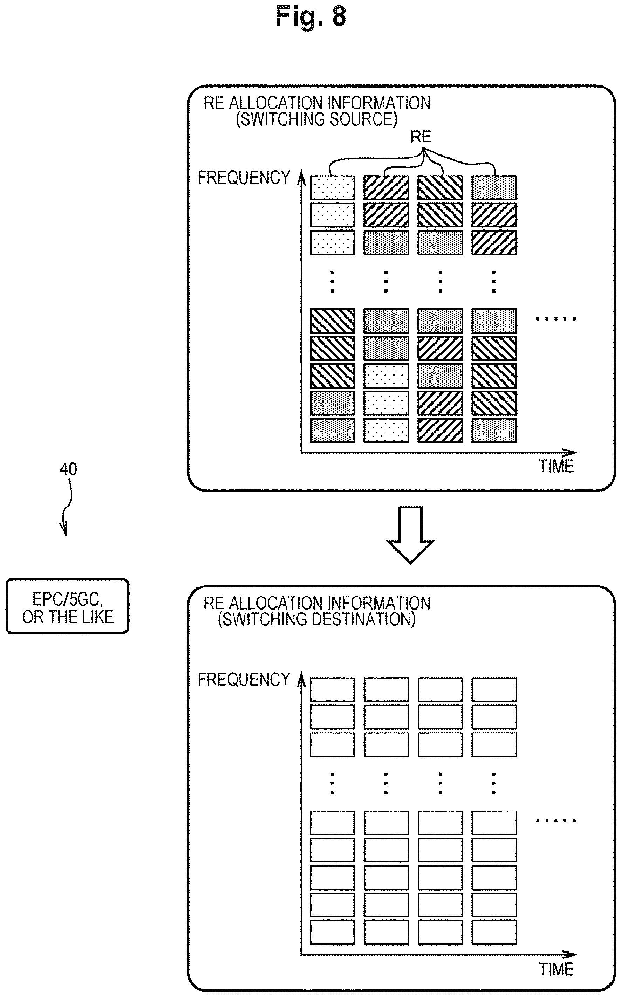

Fig. 8 is a view for explaining an example of synchronization of the RE allocation information. An upper part of Fig. 8 is an example of RE allocation information of a switching source, and a lower part of Fig. 8 is an example of RE allocation information of a switching destination.

An example of a case will be described where the performance-oriented base station 110 pooled and arranged in the base station pool 100A of Fig. 1 is a switching source base station and the power-saving oriented base station 120 is a switching destination base station. In the performance-oriented base station 110 illustrated in Fig. 1, the resource scheduler 114 allocates REs for each UE 10 using the RE allocation information of the switching source illustrated in the upper part of Fig. 8 (Fig. 1) and schedules a wireless access signal between the UE 10 and the base station 100.

The resource allocation information synchronization control unit 230 of the base station switching controller 200 (Fig. 1) copies the RE allocation information (the upper part of Fig. 8) managed by the resource scheduler 114 (MAC scheduler) from the switching source to the resource scheduler 124 of the power-saving oriented base station 120 of the switching destination. This results in making it possible to take over the data of the resource allocation information from the performance-oriented base station 110 before the switching to the power-saving oriented base station 120 after the switching.

### [Hardware configuration]

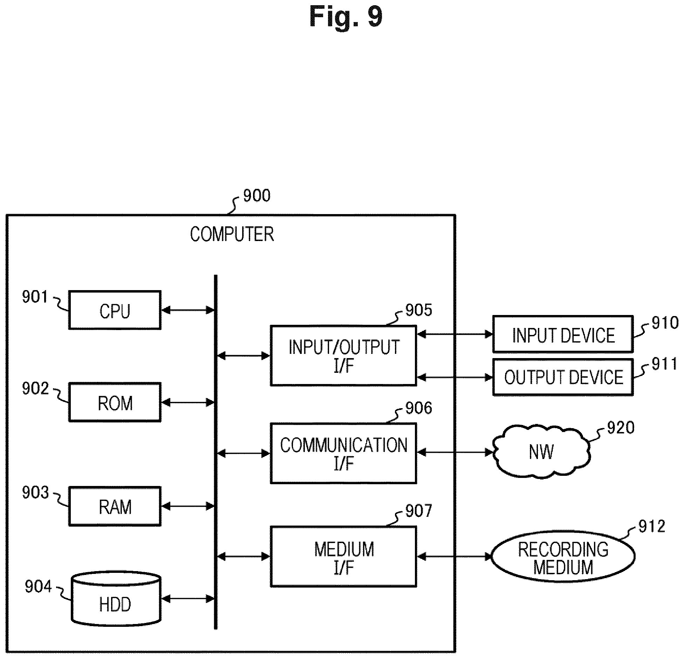

The base station switching controller (power saving base station switching device) 200 according to the above embodiment is implemented by, for example, a computer 900 having a configuration as illustrated in Fig. 9.

Fig. 9 is a hardware configuration diagram illustrating an example of the computer 900 that implements the functions of the base station switching controller (power saving base station switching device) 200.

The computer 900 includes a CPU 901, a ROM 902, a RAM 903, an HDD 904, a communication interface (I/F) 906, an input/output interface (I/F) 905, and a media interface (I/F) 907.

The CPU 901 operates on the basis of a program stored in the ROM 902 or the HDD 904 and controls each unit of the base station switching controller 200 illustrated in Fig. 1. The ROM 902 stores a boot program to be executed by the CPU 901 when the computer 900 starts, a program depending on hardware of the computer 900, and the like.

The CPU 901 controls an input device 910 such as a mouse or a keyboard, and an output device 911 such as a display, via the input/output I/F 905. The CPU 901 acquires data from the input device 910 and outputs generated data to the output device 911 via the input/output I/F 905. Note that a graphics processing unit (GPU), or the like, may be used as a processor in conjunction with the CPU 901.

The HDD 904 stores a program to be executed by the CPU 901, data to be used by the program, and the like. The communication I/F 906 receives data from another device via a communication network (for example, a network (NW) 920), outputs the data to the CPU 901, and transmits data generated by the CPU 901 to another device via the communication network.

The medium I/F 907 reads a program or data stored in a recording medium 912, and outputs the program or data to the CPU 901 via the RAM 903. The CPU 901 loads a program related to target processing from the recording medium 912 onto the RAM 903 via the medium I/F 907 and executes the loaded program. The recording medium 912 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, in a case where the computer 900 functions as the base station switching controller (power saving base station switching device) 200 configured as a device according to the present embodiment, the CPU 901 of the computer 900 implements the functions of the base station switching controller 200 by executing the program loaded on the RAM 903. Further, the HDD 904 stores data in the RAM 903. The CPU 901 reads the program related to the target processing from the recording medium 912 and executes the program. Additionally, the CPU 901 may read the program related to the target processing from another device via the communication network (NW 920).

### [Effects]

As described above, the base station switching controller 200 is a power saving base station switching device that switches a base station that processes a wireless access signal, and includes the traffic information collection unit 210 that collects an amount of traffic flowing into a base station that is operating as traffic information, the switching determination unit (the base station optimum allocation/switching determination unit 220) that selects one of suitable base stations from the base station pool 100A in which a plurality of base stations having different characteristics according to predetermined requirements are pooled and arranged in advance on the basis of the traffic information collected by the traffic information collection unit 210, and the network switching control unit 240 that switches a network between a network to be connected to a switching source base station and a network to be connected to a switching destination base station.

In this manner, it is possible to select a suitable base station 100 and dynamically switch and use the base station according to increase or decrease (for example, traffic fluctuation during daytime/nighttime due to user behavior, and the like) of traffic. This results in making it possible to simultaneously achieve high performance when an amount of traffic is large and power saving when an amount of traffic is small.

The above can be autonomously performed by machine without intervention of the operator. This eliminates the need of manpower by the operator, and it is possible to implement high-frequency switching of the base station 100 in the order of minutes/time.

In addition, it is possible to eliminate a service interruption period or reduce the service interruption period by switching the base station and performing renewal work in planned renewal of the facility, or the like.

In the wireless access system 1000, the base station switching controller 200 includes the resource allocation information synchronization control unit 230 that synchronizes the resource allocation information of the switching destination base station and the switching source base station selected by the base station optimum allocation/switching determination unit 220 and takes over the data of the resource allocation information from the switching source base station to the switching destination base station.

As described above, the resource allocation information synchronization control unit 230 synchronizes states of the base stations, so that it is not necessary to synchronize the states of the base stations, and the present invention can be applied to a case where the operation is performed by switching only the NW. For example, the present invention can be applied to a case where it is necessary to perform switching at the time of failure while there is no time for synchronization, a case where the UE does not belong, and it is not necessary to take over the state, and the like.

In the wireless access system 1000, in the base station pool 100A, the performance-oriented base station 110 intended to achieve high performance and the power-saving oriented base station 120 intended to achieve power saving are pooled and arranged.

In this manner, it is possible to implement dynamic switching control by arranging base station devices having different characteristics in the base station pool and switching the network to a suitable base station device (a performance-oriented type, a power-saving oriented type, or the like) according to the traffic conditions. For example, the performance-oriented type is used in a case where the amount of traffic is large, and the power-saving oriented type is used in a case where the amount of traffic is small.

In addition, power saving can be achieved by putting an unused base station device into the power OFF/power saving mode.

In the wireless access system 1000, in a case where the base station functions are separated into a radio unit (RU), a distributed unit (DU), and a centralized unit (CU), in the base station pool 100A, the base stations are pooled in separation units of the RU, the DU, or the CU.

In this manner, by pooling the base stations 100, a relationship between the antenna 20 and the base station 100 can be changed from 1: 1 to M: N, and the base station resources can be assigned from the pool as much as necessary, so that resource utilization efficiency can be increased.

In the wireless access system 1000, in the base station pool 100A, the base stations are pooled in units of a CPU core, an accelerator, and a network interface card (NIC) in a server, which is a unit smaller than the separation units of the RU, the DU, or the CU.

In this manner, by switching the switching target not only in units of the RU/the DU/the CU but also in units of a server component (CPU core/accelerator/NIC, etc.), finer switching control can be implemented, and further power saving can be achieved.

In the wireless access system 1000, the network switching control unit 240 resets the MAC address of the DU server of the switching destination to the RU to switch the network.

In this manner, upon switching between base stations, it is possible to take over the resource allocation information of the resource scheduler (MAC Scheduler) of the base station so that terminal reconnection processing, or the like, due to occurrence of reallocation of radio resources does not occur.

In the wireless access system 1000, the network switching control unit 240 changes a virtual local area network (VLAN) tag to switch the network in a case of VLAN connection.

In this manner, in a case of VLAN connection, the network can be switched. In other words, the switching target may be not only hardware but also software mounted on the base station hardware. For example, switching is performed between base station software having a power saving mode and performance-oriented base station software. In addition, without switching the software itself, configuration of the software may be changed to switch the mode between the power saving mode and the performance-oriented mode.

Note that, among the processing described in the above embodiment, all or some of the processing described as being automatically performed may be manually performed, or all or some of the processing described as being manually performed may be automatically performed by a known method. In addition to this, information including processing procedure, control procedure, specific names, various kinds of data, and parameters mentioned above in the specification or illustrated in the drawings can be modified as desired, unless otherwise particularly specified.

In addition, each component of each device that has been illustrated is functionally conceptual and is not necessarily physically configured as illustrated. In other words, a specific form of distribution and integration of each device is not limited to the illustrated form, and all or part of the components can be functionally or physically distributed and integrated in any unit according to various loads, usage conditions, and the like.

Further, part or all of each of the components, functions, processing units, processing means, and the like, described above may be implemented by hardware by, for example, being designed in an integrated circuit. Also, the each of the components, functions, and the like, may be implemented by software for interpreting and executing a program for causing a processor to implement the respective functions. Information such as a program, a table, and a file for implementing each of the functions can be held in a recording device such as a memory, a hard disk, or a solid state drive (SSD), or in a recording medium such as an integrated circuit (IC) card, a secure digital (SD) card, or an optical disc.

### Reference Signs List

10 UE (terminal)
20 Antenna
40 Core network
100 Base station (BBU)
100A Base station pool
100B DU pool (base station pool)
100C DU + CU pool (base station pool)
100D CU pool (base station pool)
100E RU pool (base station pool)
100F RU + DU pool (base station pool)
110 Performance-oriented base station
111, 121 Hardware
112, 122 OS, or the like
113, 123 Traffic collection unit
114, 124 Resource scheduler
115, 125 Synchronization unit
116, 126 Base station processing application
120 Power-saving oriented base station
150 RU
160 DU
170 NW switch
200 Base station switching controller (power saving base station switching device)
210 Traffic information collection unit
220 Base station optimum allocation/switching determination unit (switching determination unit)
230 Resource allocation information synchronization control unit
240 Network switching control unit
1000 Wireless access system

## Claims

1. A power saving base station switching device that switches a base station that processes a wireless access signal, the power saving base station switching device comprising:
a traffic information collection unit that collects an amount of traffic flowing into a base station that is operating as traffic information;
a switching determination unit that selects one of suitable base stations from a base station pool in which a plurality of base stations having different characteristics according to predetermined requirements are pooled and arranged in advance on a basis of the traffic information collected by the traffic information collection unit; and
a network switching control unit that switches a network between a network to be connected to a switching source base station and a network to be connected to a switching destination base station.

2. The power saving base station switching device according to claim 1, further comprising
a resource allocation information synchronization control unit that synchronizes resource allocation information of the switching destination base station and the switching source base station selected by the switching determination unit and takes over data of the resource allocation information from the switching source base station to the switching destination base station.

3. The power saving base station switching device according to claim 1,
wherein in the base station pool, a performance-oriented base station intended to achieve high performance and a power-saving oriented base station intended to achieve power saving are pooled and arranged.

4. The power saving base station switching device according to claim 1,
wherein in a case where base station functions are separated into a radio unit (RU), a distributed unit (DU), and a centralized unit (CU), in the base station pool, base stations are pooled in separation units of the RU, the DU, or the CU.

5. The power saving base station switching device according to claim 4,
wherein in the base station pool, the base stations are pooled in units of a CPU core, an accelerator, or a network interface card (NIC) in a server, which is a unit smaller than the separation units of the RU, the DU, or the CU.

6. The power saving base station switching device according to claim 4,
wherein the network switching control unit resets a MAC address of a DU server of a switching destination to the RU to switch the network.

7. The power saving base station switching device according to claim 1,
wherein the network switching control unit changes a virtual LAN (VLAN) tag to switch the network in a case of VLAN connection.

8. A wireless access system comprising a base station that processes a wireless access signal, the wireless access system comprising:
a base station pool in which a plurality of base stations having different characteristics according to predetermined requirements are pooled and arranged in advance;
a power saving base station switching device that switches a base station that processes a wireless access signal,
the power saving base station switching device including:
a traffic information collection unit that collects an amount of traffic flowing into a base station that is operating as traffic information;
a switching determination unit that selects one of suitable base stations from the base station pool on a basis of the traffic information collected by the traffic information collection unit; and
a network switching control unit that switches a network between a network to be connected to a switching source base station and a network to be connected to a switching destination base station.

9. A power saving base station switching method of a power saving base station switching device that switches a base station that processes a wireless access signal, the power saving base station switching method comprising:
the power saving base station switching device executing
a step of collecting an amount of traffic flowing into a base station that is operating as traffic information;
a step of selecting one of suitable base stations from a base station pool in which a plurality of base stations having different characteristics according to predetermined requirements are pooled and arranged in advance on a basis of the collected traffic information; and
a step of switching a network between a network to be connected to a switching source base station and a network to be connected to a switching destination base station.
